# EUROPÄISCHE PATENTSCHRIFT

(11) **EP 2 759 732 B1**
(45) Veröffentlichungstag und Bekanntmachung des Hinweises auf die Patenterteilung: **28.09.2016**
(21) Anmeldenummer: 14152262.3
(22) Anmeldetag: 23.01.2014
(51) Int. Cl.: F16D 65/08, F16D 51/16

(54) **Bremsbacke für eine Trommelbremse**
Brake shoe for a drum brake
Mâchoire de frein pour un frein à tambour

(30) Priorität: 24.01.2013 DE 102013201111
(43) Veröffentlichungstag der Anmeldung: 30.07.2014
(73) Patentinhaber: SAF-HOLLAND GmbH, 63856 Bessenbach (DE)
(72) Erfinder: Wallmeier, Stefan, 63773 Goldbach (DE); Roos, Michael, 97828 Marktheidenfeld (DE)
(74) Vertreter: Müller Schupfner & Partner Patent- und Rechtsanwaltspartnerschaft mbB

(56) Entgegenhaltungen:
- DE-A1-102010 021 393
- US-A- 1 724 114
- US-A- 2 723 016
- US-A- 2 818 944
- US-A- 3 412 835

## Beschreibung

Die vorliegende Erfindung betrifft Trommelbremsen und insbesondere eine dafür vorgesehene Bremsbacke. Eine gattungsgemäße Bremse ist z.B. aus US-A-2 818 944 bekannt.

Trommelbremssysteme sind aus dem Stand der Technik hinlänglich bekannt, wobei eine fest mit dem Fahrzeugrad verbundene Bremstrommel durch Bremsbacken welche gegen die zylinderförmige Innenseite der Bremstrommel gepresst werden, gebremst wird. Bei der Auslegung derartiger Trommelbremssysteme treten jedoch immer Zielkonflikte bezüglich der unterschiedlichen "äußeren" Eigenschaften der Trommelbremse auf. So kann beispielsweise die Bremsleistung nur auf Kosten einer verringerten Lebensdauer der Trommelbremse erhöht werden oder beispielsweise die allgemeine Leistungsfähigkeit der Bremse beziehungsweise das maximale Bremsmoment kann nur durch eine Vergrößerung der gesamten Trommelbremse und somit durch Gewichtszunahme und einem wachsenden Bauraumbedarf "erkauft" werden. Das Entwicklungspotential insbesondere an der Gestaltung der Bremsbacken für Trommelbremsen ist dabei in Hinblick beispielsweise auf eine gezielte Abnutzung bestimmter Abschnitte der Bremsbacke oder einer beispielsweise mehrstufige Bremscharakteristik in keiner weise ausgenutzt und es besteht entsprechend Entwicklungsbedarf.

Aufgabe der vorliegenden Erfindung ist es, eine Trommelbremse und eine Bremsbacke für eine Trommelbremse bereitzustellen, bei welchen insbesondere die Abnutzungserscheinungen je nach Betriebsverhalten der Trommelbremse optimiert sind und das Bremsverhalten der Trommelbremse auf verschiedene Anforderungen während des Betriebes Trommelbremse eingestellt werden kann.

Diese Aufgabe wird gelöst durch eine Bremsbacke gemäß dem unabhängigen Anspruch 1 und eine Trommelbremse gemäß dem unabhängigen Anspruch 13.

Weitere Vorteile und Merkmale der Erfindung ergeben sich aus den abhängigen Ansprüchen.

Erfindungsgemäß weist eine Bremsbacke für eine Trommelbremse eine Trageinheit auf, wobei die Trageinheit einen Lagerabschnitt zur schwenkbaren Lagerung und einen Betätigungsabschnitt aufweist, wobei die Trageinheit zwischen dem Lagerabschnitt und dem Betätigungsabschnitt einen gekrümmt ausgebildeten ersten Tragabschnitt und einen gekrümmt ausgebildeten zweiten Tragabschnitt aufweist, und wobei der Mittelpunkt der mittleren Krümmung des ersten Tragabschnitts vom Mittelpunkt der mittleren Krümmung des zweiten Tragabschnitts beabstandet ist. Die Trageinheit ist bevorzugt ein gekrümmter Körper, der in einem Lagerabschnitt schwenkbar angeordnet ist, wobei dem Lageabschnitt im Wesentlichen gegenüberliegend, bzw. an dem, dem Lagerabschnitt gegenüberliegenden, distalen Ende der Trageinheit ein Betätigungsabschnitt vorgesehen ist. Der Betätigungsabschnitt dient insbesondere zur Aufnahme einer, beispielsweise von einem Bremszylinder oder einer Spreizkeilvorrichtung aufgebrachten Betätigungskraft und eine Übertragung dieser Betätigungskraft an die Trageinheit. Die erfindungsgemäße Bremsbacke ist bevorzugt innerhalb einer Bremstrommel angeordnet, wobei durch Anlegen einer Betätigungskraft an den Betätigungsabschnitt die Bremsbacke bevorzugt derart verschwenkt wird, dass sie an der Innenseite der Bremstrommel in einen Reibkontakt mit dieser tritt. Erfindungsgemäß weist die Trageinheit eine, sich über ihre Erstreckung zwischen dem Lagerabschnitt und dem Betätigungsabschnitt verändernde, bzw. nicht konstante Krümmung auf. Als Krümmungslinie der Krümmung ist in diesem Zusammenhang eine in der konvex nach außen weisenden Fläche der Trageinheit liegende Linie zu verstehen, die bevorzugt kreisähnlich ist. Dabei kann die Krümmungslinie ein exakter Kreisbogenabschnitt sein oder leicht davon abweichend auch elliptisch ausgebildet sein. Ein Tragabschnitt der Trageinheit weist erfindungsgemäß eine mittlere Krümmung auf, die eine tatsächlich variierende Krümmung der Krümmungslinie des Tragabschnitts auf einen Kreisabschnitt mittelt. Dieser Kreisabschnitt der mittleren Krümmung besitzt einen Mittelpunkt, der erfindungsgemäß vom Mittelpunkt der mittleren Krümmung des zweiten Tragabschnitts beabstandet ist. Bevorzugt kommt bei dieser Auslegung eine, an der konvexen Außenfläche der Trageinheit vorgesehene Belageinheit, bei Verschwenkung der Bremsbacke um den Lagerabschnitt zuerst im Bereich des ersten Tragabschnitts in Berührung mit einer, bevorzugt kreisförmig ausgebildeten Bremstrommel und danach auch im Bereich des zweiten Tragabschnitts. Auf diese Weise ist es möglich, mit relativ geringem konstruktivem Aufwand mit ein und derselben Bremsbacke verschiedene Bremscharakteristika für eine Teillastbremsung beziehungsweise eine nur mit beispielsweise 50% der Betätigungskraft ausgeführte Bremsung und gleichzeitig auch bestimmte Bremscharakteristika für eine Vollbremsung, das heißt Bremsung mit maximaler Betätigungskraft zu erreichen. Es versteht sich, dass hierbei durch Einstellung der Biegesteifigkeit der Trageinheit in verschiedenen Querschnitten entlang der Krümmungslinie der Trageinheit bevorzugt auch eine Vielzahl von Betriebspunkten mit jeweils für diese Betriebspunkte bevorzugten Bremscharakteristika einzustellen. Als Bremscharakteristik wird in diesem Zusammenhang insbesondere das Verhalten der Bremsbacke bevorzugt im Zusammenspiel mit der umgebenden Bremstrommel bei Anlegen einer bestimmten Betätigungskraft an den Betätigungsabschnitt der Bremsbacke definiert. Es kann an dieser Stelle die Betätigungskraft als Eingangsgröße und die von der Bremsbacke daraufhin verursachte Bremswirkung als letztendlich gewünschte Ausgangsgröße des erfindungsgemäßen Bremssystems verstanden werden. Bevorzugt weist die Bremsbacke dabei eine nichtlineare Bremscharakteristik auf, d.h. für eine linear ansteigende Betätigungskraft ist der Anstieg der Bremswirkung nicht-linear. Die Betätigungskraft bewirkt die Anlage der Bremsbacke an einer bevorzugt vorgesehenen Bremstrommel und verbiegt, bzw. verformt die Bremsbacke, bzw. die Trageinheit der Bremsbacke. Sämtliche Verformungen, bzw. Verbiegungen sollen im Sinne der vorliegenden Erfindung im elastischen Bereich stattfinden, also vollständig wieder rückstellbar sein. Weitere Ausgangsgrößen des Bremssystems sind der an der Bremsbacke auftretende Verschleiß und die von der Bremsbacke verursachte Wärmeentwicklung. Um für eine bestimmte Betätigungskraft eine gewünschte Bremswirkung zu erzielen ist es bevorzugt, eine gewünschte Kombination der Parameter Reibungsfläche zwischen Bremsbacke und Bremstrommel, Reibbeiwert der Reibpaarung zwischen Bremsbacke und Bremstrommel und Anpresskraft der in Reibung mit der Trommel stehenden Fläche der Bremsbacke an die Trommel vorzusehen. Diese drei Faktoren gehen ein in den Bremsfaktor c* welcher auch als die "Summe aller inneren Eigenschaften" der Trommelbremse verstanden werden kann. Durch eine erfindungsgemäße Ausbildung der Krümmung der Trageinheit und der an dieser festlegbaren Belageinheit es somit möglich, für bestimmte Betätigungskräfte den jeweils gewünschten Bremsfaktor c* zu erreichen.

Mit Vorteil steht der Abstand der Mittelpunkte voneinander in einem Verhältnis von 0,01 bis 0,15, bevorzugt 0,03 bis 0,1 und besonders bevorzugt von 0,05 bis 0,07 zu einem ersten mittleren Krümmungsradius des ersten Tragabschnitts. Der Versatz der Mittelpunkte der mittleren Krümmungsradien des ersten und des zweiten Tragabschnitts bewirkt vorzugsweise, dass die Trageinheit keine linear durchgehende Krümmung ihrer Außenkontur aufweist. Als Folge einer derartigen Auslegung, tritt ein mit dem ersten Tragabschnitt verbundener Abschnitt einer Belageinheit zuerst in Bremswirkung, während ein am zweiten Tragabschnitt festgelegter Belagabschnitt erst Bremswirkung entfaltet, wenn die Trageinheit durch eine Betätigungskraft ausreichend verformt ist. Der Versatz der Mittelpunkte zueinander in Relation zum ersten Krümmungsradius des ersten Tragabschnitts ist dabei ein Maß dafür, wie stark die Krümmung des zweiten Tragabschnitts von der Krümmung des ersten Tragabschnitts abweicht. Je weiter die beiden Mittelpunkte von einander entfernt sind, desto stärker muss die Trageinheit verformt werden, damit der zweite Belagabschnitt Bremswirkung entfaltet. Die Auswahl eines bestimmten Verhältnisses des Abstands der Mittelpunkte der mittleren Krümmung der Tragabschnitte zum ersten Krümmungsradius erlaubt somit einen Verformungsgrad der Trageinheit der Bremsbacke zu bestimmen, der nötig sein soll, damit ausgewählte Belagabschnitte der Bremsbacke in Kontakt mit der bevorzugt vorgesehenen Bremstrommel treten. Die Bremscharakteristik der Bremsbacke lässt sich somit über dieses bevorzugte Verhältnis anpassen. Die Obergrenze von 0,15 des bevorzugten Verhältnisbereiches ist dabei durch das Material der Trägereinheit gegeben, welches nur elastisch verformt werden soll, damit keine dauerhaften Verformungen der Bremsbacke auftreten, welche die Bremscharakteristik verändern würden.

Erfindungsgemäß spannt der erste Tragabschnitt einen ersten Bogenwinkel um den Mittelpunkt seiner mittleren Krümmung auf und der zweite Tragabschnitt spannt einen zweiten Bogenwinkel um den Mittelpunkt seiner mittleren Krümmung auf, wobei das Verhältnis des ersten Bogenwinkels zum zweiten Bogenwinkel im Bereich von 0,5 bis 3, bevorzugt 0,7 bis 2 und besonders bevorzugt bei ca. 0,9 bis 1,3 liegt. Der von einem Tragabschnitt aufgespannte Bogenwinkel ist ein Ausdruck für seine Erstreckung entlang der Krümmungslinie, wobei der Bogenwinkel auch bei einer vergrößert oder verkleinert skalierten Bremsbacke gleich bleibt und daher ein Maß ist, welches auch für verschieden dimensionierte Bremsbacken die selbe Aussagekraft besitzt. Je nach den erwarteten Betriebszuständen der Bremsbacke und deren erwarteter mittlerer Dauer über die Lebensdauer der Bremsbacke, kann über ein bestimmtes Bogenwinkelverhältnis effektiv die Verteilung der gesamten, zur Verfügung stehenden Bremsbelagoberfläche auf den ersten und den zweiten Tragabschnitt ausgelegt werden. Soll bei Teilbremsungen beispielsweise eine verhältnismäßig große Fläche der Belageinheit in Bremswirkung treten, so wird der am ersten Tragabschnitt festgelegte erste Belagabschnitt bevorzugt größer ausgelegt, als der zweite Belagabschnitt und das Bogenwinkelverhältnis liegt bevorzugt im Bereich von 1,3 bis 3. Für einen deutlichen Zuwachs der in Bremswirkung stehenden Bremsbelagfläche bei Anlegen einer Betätigungskraft, die beispielsweise zwischen 80 - 100 % der maximalen Betätigungskraft liegt, ist bevorzugt der zweite Belagabschnitt größer ausgebildet als der erste Belagabschnitt und das Bogenwinkelverhältnis liegt bevorzugt zwischen 0,5 und 0,9.

Gemäß einer bevorzugten Ausführungsform der Erfindung steht im entspannten Zustand der Bremsbacke der zweite mittlere Krümmungsradius des zweiten Tragabschnitts zum ersten mittleren Krümmungsradius des ersten Tragabschnitts in einem Verhältnis von 0,8 bis 0,99, vorzugsweise 0,85 bis 0,95 und besonders bevorzugt von ca. 0,88 bis 0,92. Neben dem Versatz der Mittelpunkte der mittleren Krümmung der Tragabschnitte zueinander kann auch der mittlere Krümmungsradius der Tragabschnitte verschieden ausgebildet sein, um die Bremscharakteristik der Bremsbacke gezielt zu beeinflussen. Es versteht sich, dass bei Anlegen einer Betätigungskraft an eine, in einer Bremstrommel angeordnete erfindungsgemäße Bremsbacke, die Trageinheit in gewissem Maße elastisch verformt wird, insbesondere derart, dass sich der mittlere Krümmungsradius beider Tragabschnitte dabei vergrößert. Es ist bevorzugt, dass ohne Anliegen einer Betätigungskraft der zweite mittlere Krümmungsradius des zweiten Tragabschnitts kleiner ist, als der Krümmungsradius des ersten Tragabschnitts. Vorzugsweise ist der zweite Tragabschnitt erst bei Anliegen einer nahezu maximalen Betätigungskraft derart verformt, dass der an ihm festgelegte Betätigungsabschnitt vollständig, d.h. mit seiner gesamten Reibfläche, Bremswirkung entfaltet. Durch die vorteilhafte Ausbildung mit einem zweiten Krümmungsradius der kleiner ist als der erste Krümmungsradius, ist es möglich eine nichtlineare Bremscharakteristik zu erzeugen, bei der die Bremsbacke bei geringen Betätigungskräften nur teilweise mit der Bremstrommel in Eingriff gelangt, um sich bei Steigern der Betätigungskraft derart zu verformen, dass sie im Wesentlichen vollständig an der Bremstrommel eingreift. Je kleiner das Verhältnis der mittleren Krümmungsradien ist, desto stärker muss der zweite Tragabschnitt verformt werden, um bei voller Betätigungskraft denselben mittleren Krümmungsradius zu erreichen wie der erste Tragabschnitt. Die Untergrenze des bevorzugten Verhältnisbereiches ist entsprechend vorgegeben durch die Fähigkeit des Herstellungsmaterials elastisch verformt zu werden.

Mit Vorteil ist an der konvex gekrümmten Außenseite der Trageinheit eine Belageinheit festlegbar ist, wobei die Trageinheit und die Belageinheit derart ausgebildet sind, dass bei Anlegen einer Betätigungskraft kleiner einer Grenzkraft an den Betätigungsabschnitt die Belageinheit nur in einem ersten Belagabschnitt Bremswirkung entfaltet, wobei bei Anlegen einer Betätigungskraft größer der Grenzkraft die Belageinheit auch in einem zweiten Belagabschnitt Bremswirkung entfaltet. Mit anderen Worten gelangt bei Anlegen einer ersten Betätigungskraft an die Trageinheit die Belageinheit nur in einem ersten Belagabschnitt in eine Reibpaarung mit der Bremstrommel. Die spezielle Ausbildung des Verbundes der Trageinheit mit der Belageinheit erreicht bevorzugt ein nichtlineares Verformungsverhalten beider Elemente, wobei das Verformungsverhalten der Belageinheit das vorzugsweise nichtlineare Verformungsverhalten der Trageinheit unterstützt. Insbesondere bevorzugt werden die Trageinheit und/oder die Belageinheit in aufeinander abgestimmter Weise mit Verstärkungen oder lokalen Materialschwächungen versehen, um ein bestimmtes Verformungsverhalten des Verbundes aus Trageinheit und Betätigungseinheit bei Anlegen einer Betätigungskraft einzustellen. Wird die Betätigungskraft erhöht und überschreitet schließlich die zuvor genannte Grenzkraft, so ist es bevorzugt, dass die Belageinheit auch in einem zweiten Belagabschnitt Bremswirkung entfaltet, beziehungsweise in Reibung mit der Bremstrommel gelangt. Es kann auf diese Weise eine zwei- und bevorzugt eine mehrstufige Bremscharakteristik der Bremsbacke, abhängig von der angelegten Betätigungskraft erzielt werden. Dabei ist es bevorzugt, dass Betätigungskräfte kleiner der Grenzkraft besonders bei Teilbremsungen auftreten, welche nicht die maximal mögliche Bremskraft der Trommelbremse erfordern. Betätigungskräfte oberhalb der Grenzkraft sind dabei bevorzugt zur Durchführung einer Vollbremsung vorgesehen, wobei die Bremsbacke bevorzugt mit allen Belagabschnitten der Belageinheit Bremswirkung entfaltet, bzw. in eine Reibpaarung mit der Bremstrommel tritt.

Bevorzugt ist es, dass der erste Belagabschnitt eine größere Dicke aufweist, als der zweite Belagabschnitt. Im Betrieb der Trommelbremse werden üblicherweise mehr Teilbremsungen durchgeführt, als Vollbremsungen. Das bedeutet auf die erfindungsgemäße Bremsbacke bezogen, dass der erste Belagabschnitt im Betrieb häufiger beansprucht wird, d. h. häufiger Bremswirkung entfaltet, beziehungsweise in Reibung mit der Bremstrommel tritt, als der zweite Belagabschnitt. Folglich ist es bevorzugt, den ersten Belagabschnitt mit einer größeren Dicke auszubilden, als den zweiten Belagabschnitt, wobei auf diese Weise der höheren Abnutzung des ersten Belagabschnittes Rechnung getragen werden kann und beide Belagabschnitte bevorzugt annähernd zum gleichen Zeitpunkt an ihre Lebensdauergrenze gelangen. Für eine Vielzahl von Belagabschnitten ist eine entsprechende Staffelung der Dicke der jeweiligen Belagabschnitte, abhängig von der im Einsatz erwarteten Beanspruchung, bevorzugt.

Es ist besonders bevorzugt, dass der erste Belagabschnitt eine erste Dicke und der zweite Belagabschnitt eine zweite Dicke aufweist, wobei die erste Dicke bevorzugt in einem Verhältnis von 1,05 bis 4, besonders bevorzugt von 1,2 bis 2 und insbesondere bevorzugt von ca. 1,5 zur zweiten Dicke steht. Das Verhältnis der Dicken zueinander von 4 markiert dabei das im Sinne einer einfachen Konstruktion der Trommelbremse höchstmögliche Verhältnis der Dicke des ersten Belagabschnittes zur Dicke des zweiten Belagabschnittes. Insbesondere, wenn sich der erste Belagabschnitt um einen Betrag hoher Dicke abnutzt, ist es erforderlich, die Bremsbacke innerhalb der Trommelbremse auf intelligente Weise zu führen, dass sich mit zunehmender Abnutzung der Bremsbacke beziehungsweise des ersten Belagabschnittes die allgemeine Bremscharakteristik der Bremsbacke nicht ungewollt ändert. Durch Ausbilden des ersten und zweiten Belagabschnitts mit einem bevorzugten Verhältnis der Dicken ist es möglich, die erfindungsgemäße Bremsbacke an bestimmte Einsatzprofile des Kraftfahrzeuges anzupassen. Mit anderen Worten heißt dies, dass beispielsweise ausgehend von einem bestimmten Verhältnis der im Einsatz erwarteten Teilbremsungen zu den im Einsatz erwarteten Vollbremsungen, die Dicke des ersten Belagabschnittes vorzugsweise in ein entsprechendes Verhältnis zur Dicke des zweiten Belagabschnittes gesetzt wird, um zu erreichen, dass beide Belagabschnitte ihre Lebensdauergrenze ungefähr zeitgleich erreichen. Mit Vorteil ist somit die Abnutzung der Bremsbacke für deren Gesamtlebensdauer optimiert.

In einer bevorzugten Ausführungsform ist der erste Belagabschnitt aus einem Material höherer Abriebbeständigkeit ausgebildet als der zweite Belagabschnitt. Dies ist vorteilhaft, da erwartungsgemäß der erste Belagabschnitt häufiger in Bremswirkung tritt, als der zweite Belagabschnitt. Auf diese Weise kann wiederum der Verschleiß des ersten relativ zum zweiten Belagabschnitt derart angepasst werden, dass beide Belagabschnitte ungefähr zur selben Zeit ihre maximale Abnutzung erfahren. Das Verhältnis der Abriebbeständigkeit wird dabei bevorzugt in Abhängigkeit des zu erwartenden Einsatzprofils der Bremsbacke im Einsatz im Kraftfahrzeug angepasst.

Bevorzugt ist der zweite Belagabschnitt aus einem Material mit einem höheren Reibwert ausgebildet, als der erste Belagabschnitt. Da der zweite Belagabschnitt bevorzugt bei Vollbremsungen zum Einsatz gelangt, ist es vorteilhaft, dass bei diesen Bremsungen die Bremsbacke eine maximale Bremskraft erzeugt. Aus diesem Grund ist der zweite Belagabschnitt mit Vorteil aus einem Material mit höherem Reibwert ausgebildet, als der erste Belagabschnitt. Üblicherweise ist der Verschleiß eines Materials mit einem höherem Reibwert größer, als der Verschleiß eines Materials mit einem geringerem Reibwert, wobei es aus diesem Grund bevorzugt ist, den ersten Belagabschnitt mit einem Material geringeren Reibwertes und damit auch geringem Verschleiß auszubilden, als den zweiten Belagabschnitt.

Vorzugsweise ist der Reibwert des zweiten Belagabschnitts ein 1,1- bis 3-faches bevorzugt ein 1,15- bis 2-faches und besonders bevorzugt ein 1,3- bis 1,7-faches des Reibwertes des ersten Belagabschnitts. Je nach Einsatzprofil, welches für die Bremsbacke im Betrieb im Kraftfahrzeug erwartet wird, kann es bevorzugt sein, den zweiten Belagabschnitt aus einem Material mit deutlich höherem oder nur geringfügig höherem Reibwert auszubilden. So kann beispielsweise das Material des zweiten Belagabschnitts den dreifachen Reibwert des Materials des ersten Belagabschnitts aufweisen, um bei einer Vollbremsung einen deutlich gesteigerten Gesamtreibwert, bzw. mittleren Reibwert der gesamten Bremsbacke beziehungsweise der gesamten Belageinheit zu erzielen. Andererseits kann es auch bevorzugt sein, dass der zweite Belagabschnitt aus einem Material nur geringfügig höherem Reibwertes ausgebildet ist, als der erste Belagabschnitt, wenn beispielsweise relativ häufige Vollbremsungen relativ zu den Teilbremsungen zu erwarten sind.

Vorzugsweise weist die Belageinheit mehr als zwei Belagabschnitte auf, um eine Bremscharakteristik der Bremsbacke mit mehr als zwei Stufen zu erzielen. Mittels einer solchen Auslegung der Bremsbacke beziehungsweise der Belageinheit ist es bevorzugt möglich, eine mehrstufige Bremscharakteristik zu verwirklichen, um beispielsweise bestimmte Bremseigenschaften der Bremsbacke bei halber Betätigungskraft, bei Dreiviertel der Betätigungskraft und bei maximaler Betätigungskraft zu verwirklichen.

Mit Vorteil weist die Trageinheit ein Stegblech und ein Belagblech auf, wobei das Stegblech und/oder das Belagblech eine vom Lagerabschnitt zum Betätigungsabschnitt hin zunehmende Materialstärke aufweist. Besonders bevorzugt ist es hierbei, dass das Stegblech im Wesentlichen orthogonal zum Belagblech ausgerichtet ist und vorteilhafterweise mittig am Belagblech angebracht ist. Mit anderen Worten weist die Trageinheit einen T-förmigen Querschnitt auf. Mit zunehmender Materialstärke des Steg blechs und/oder des Belagblechs, nimmt im Wesentlichen auch das Flächenträgheitsmoment zu, wobei bei gleichbleibendem E-Modul die Biegesteifigkeit der Trageinheit zunimmt. Weiterhin bevorzugt kann auch eine Vielzahl von Stegblechen vorgesehen sein, welche jeweils orthogonal an dem Belagblech befestigt sind. Insbesondere bei der Ausbildung des Stegblechs und/oder des Belagblechs als gewalztes Blech ist es besonders einfach, während der Herstellung bereits eine gleichmäßig zu- oder abnehmende Materialstärke zu erreichen, wobei das Belagblech und das Stegblech anschließend bevorzugt mittels eines Schweißverfahrens miteinander zur Trageinheit verbunden werden. Neben der Materialstärke der Bleche kann es auch bevorzugt sein, dass bei gleichbleibender Blechdicke beziehungsweise Stärke das Flächenträgheitsmoment dennoch im Verlauf der Krümmungslinie zunimmt in dem beispielsweise der Querschnitt des Stegblechs und/oder des Belagblechs zunimmt. Dies kann beispielsweise erreicht werden, indem die Steghöhe, also die Erstreckung des Stegbleches orthogonal zum Belagblech im Verlauf entlang der Krümmungslinie ansteigt.

In einer bevorzugten Ausführungsform weist die Trageinheit zumindest eine lokale Materialschwächung auf, welche die Biegesteifigkeit der Trageinheit verringert. Als lokale Materialschwächung kommt insbesondere bevorzugt ein Rücksprung oder eine Aussparung in der Trageinheit zum Einsatz der gezielt an einer bestimmten Stelle im Verlauf entlang der Krümmungslinie das Flächenträgheitsmoment der Trageinheit und somit die Biegesteifigkeit in diesem Punkt lokal verringert. Besonders bevorzugt ist die lokale Materialschwächung im Stegblech vorgesehen. Mittels der lokalen Materialschwächung kann gezielt ein Bereich an der Trageinheit ausgebildet werden in welchem sich diese leichter verbiegt als in den übrigen Bereichen außerhalb der lokalen Materialschwächung. So wird beispielsweise durch das Einbringen einer lokalen Materialschwächung ungefähr mittig an der Trageinheit, d. h. mittig in Bezug auf den Verlauf der Krümmungslinie, die Trageinheit in zwei Teile unterteilt, welche bevorzugt im Bereich der lokalen Materialschwächung durch Verbiegung der Trageinheit zueinander verschwenkbar sind. Es versteht sich, dass zur Beeinflussung der Biegesteifigkeit der Bremsbacke auch lokale Materialverstärkungen vorgesehen sein können. Beispielsweise können Querstege oder Längsstege an der Trageinheit angeschweißt oder angeschraubt sein, um der Bremsbacke in bestimmten Bereichen zu verstärken, d. h. mit einer höheren Biegesteifigkeit zu versehen.

Gemäß einer bevorzugten Ausführungsform weist der Betätigungsabschnitt einen ersten Eingriffsabschnitt und einen zweiten Eingriffsabschnitt auf, wobei der erste Eingriffsabschnitt ausgelegt ist, eine Betätigungskraft kleiner der Grenzkraft auf die Trägereinheit zu übertragen und wobei der zweite Eingriffsabschnitt ausgelegt ist, eine Betätigungskraft größer der Grenzkraft auf die Trageinheit zu übertragen. Der Betätigungsabschnitt ist bevorzugt der Abschnitt der Bremsbacke, an dem eine Kraft auf die Bremsbacke übertragen wird, welche die Bremsbacke gegen die Innenseite der Bremstrommel presst. Mit Vorteil weist der Betätigungsabschnitt eine Materialverstärkung und/oder eine Oberflächenbeschaffenheit auf, die Reibung und hertzscher Flächenpressung besonders gut widersteht. Dabei ist der Betätigungsabschnitt vorzugsweise für den Krafteintrag von einem S-Nocken oder einer Spreizkeilvorrichtung oder einer hydraulisch betriebenen Kolbenanordnung ausgelegt. Durch die Verschwenkung der Bremsbacke um den Lagerabschnitt verschiebt sich bevorzugt auch der tatsächliche Übertragungspunkt zwischen dem die Kraft aufbringenden Betätigungsmittel und dem Betätigungsabschnitt der Bremsbacke. Entsprechend wird bei Anlegen einer kleinen Betätigungskraft eine relativ kleine Verschwenkbewegung der Bremsbacke und in Lagerabschnitt erfolgen und bevorzugt das Betätigungsmittel im ersten Eingriffsabschnitt des Betätigungsabschnitts eingreifen und bei anliegen einer größeren Betätigungskraft, welche die Bremskraft übersteigt und entsprechend eine größere Verschwenkung der Bremsbacke verursacht, das Eingriffsmittel im zweiten Eingriffsabschnitt des Betätigungsabschnitts angreift.

Insbesondere bevorzugt ist es hierbei, dass der erste Eingriffsabschnitt ausgelegt, die Betätigungskraft mit einer in Richtung des ersten Belagabschnitts weisenden Kraftkomponente auf die Trageinheit zu übertragen. Bevorzugt ist also der erste Eingriffabschnitt derart ausgelegt bei Anlegen einer Betätigungskraft, welche kleiner als die Grenzkraft ist, diese mit einer Kraftkomponente, welche in Richtung des ersten Belagsabschnitts weist, auf die Trageinheit übertragen wird. Bevorzugt steht der erste Eingriffsabschnitt dabei schräg, bzw. nicht senkrecht zur Hauptrichtung der Betätigungskraft, sodass die an die Trageinheit übertragene Kraft zumindest eine Komponente in Richtung des ersten Belagsabschnitts aufweist. In der Folge wird der erste Belagabschnitt mit einer höheren, in Radialrichtung der Krümmung wirkenden Kraft gegen die Innenseite einer Bremstrommel gepresst. Bevorzugt ist dabei der erste Eingriffsabschnitt als im Wesentlichen planare Fläche ausgebildet, an welcher das Betätigungsmittel der Bremsanlage der Trommelbremse angreift. Weiterhin bevorzugt ist der zweite Eingriffsabschnitt ebenfalls als planare bzw. ebene Angriffsfläche für das Betätigungsmittel ausgelegt, wobei der zweite Eingriffsabschnitt verschwenkt zum ersten Eingriffsabschnitt ausgerichtet ist. Mit anderen Worten weist der Betätigungsabschnitt der Bremsbacke eine bevorzugt dachförmige oder umgekehrt V-förmige Geometrie auf, wobei der nach innen beziehungsweise zum Lagerabschnitt hin gerichtete Schenkel des umgekehrten V's der erste Eingriffsabschnitt ist und der nach außen beziehungsweise vom Lagerabschnitt abgewandte Schenkel des V' s der zweite Eingriffsabschnitt ist.

Weiterhin erfindungsgemäß ist eine Trommelbremse vorgesehen, umfassend eine Bremstrommel und eine Bremsbacke mit einer Belageinheit, wobei im ersten Zustand der Trommelbremse die Belageinheit nur mit einem ersten Belagabschnitt mit der Bremstrommel in Eingriff gelangt und wobei in einem zweiten Zustand der Trommelbremse die Belageinheit mit dem ersten Belagabschnitt und einem zweiten Belagabschnitt mit der Bremstrommel in Eingriff gelangt. Bevorzugt liegt der erste Zustand der Trommelbremse dann vor, während eine Teilbremsung, d. h. eine Bremsung mit einer Betätigungskraft, die kleiner als die für die Trommelbremse maximal vorgesehene Kraft ist, durchgeführt wird. Der zweite Zustand ist bevorzugt dadurch gekennzeichnet, dass die maximale Betätigungskraft aufgebracht wird um die Belageinheit möglichst vollständig, d. h. mit der maximal möglichen Reibfläche, an der Bremstrommel zur Anlage zu bringen. Selbstverständlich ist es bevorzugt, dass die Trommelbremse zwei einander gegenüberliegende Bremsbacken aufweist. Weiterhin bevorzugt ist es, dass im normalen Betrieb der Trommelbremse die Bremsbacke derart in der Trommelbremse angeordnet ist, dass die Bremstrommel relativ zur Bremsbacke in Richtung des Endes der Bremsbacke rotiert, an welchem die Bremsbacke schwenkbar gelagert ist. Kommt es bei dieser Rotationsrichtung der Bremstrommel zu einem Eingriff zwischen Bremsbacke und Bremstrommel, so tritt der sogenannte Selbstverstärkungseffekt auf, wobei die entlang des Umfangs der Krümmung der Bremsbacke wirkende Bremskraft gleichzeitig die Anpressung der Bremsbacke beziehungsweise der Belageinheit der Bremsbacke an die Bremstrommel verstärkt.

Bevorzugt greift an der Bremsbacke eine Betätigungskraft an, um die Bremsbacke gegen die Bremstrommel zu pressen, wobei der erste Zustand dadurch gekennzeichnet ist, dass die Betätigungskraft eine Grenzkraft nicht übersteigt und wobei der zweite Zustand dadurch gekennzeichnet ist, dass die Betätigungskraft größer als die Grenzkraft ist. Mit anderen Worten ist die Bremsbacke der Trommelbremse derart ausgebildet, dass sie auf das Anlegen einer Betätigungskraft bestimmter Höhe mit einer bestimmten Verformung reagiert, wobei entsprechend ein erster und ein zweiter Zustand der Trommelbremse einstellbar sind. Vorzugsweise ist es abhängig davon, welche Betätigungskraft an die Trommelbremse angelegt wird, ob die Trommelbremse in den ersten Zustand oder in den zweiten Zustand gelangt. Mit anderen Worten bestimmt der Anwender der Trommelbremse durch die Betätigungskraft, die er aufwendet, ob eine Teilbremsung, also eine Bremsung im ersten Zustand, oder eine Vollbremsung, also eine Bremsung im zweiten Zustand, durchführt. Es ist durch die erfindungsgemäße Ausbildung der Bremsbacke, insbesondere durch zuvor beschriebene Variation der Biegesteifigkeit der Trageinheit, mit Vorteil erreichbar, dass die Trommelbremse je nach angelegter Betätigungskraft eine bestimmte Bremscharakteristik aufweist.

Es versteht sich, dass die weiteren Merkmale und Vorteile der erfindungsgemäßen Bremsbacke ebenfalls in der erfindungsgemäßen Trommelbremse Anwendung finden können.

Weitere Vorteile und Merkmale der vorliegenden Erfindung ergeben sich aus der nachfolgenden Beschreibung mit Bezug auf die beigefügten Figuren. Es versteht sich, dass Merkmale die für eine bestimmte Ausführungsform dargestellt sind auch mit Merkmalen anderer Ausführungsformen kombiniert werden können. Es zeigen:
- Fig. 1: eine Ansicht der erfindungsgemäßen Trommelbremse im ersten Zustand,
- Fig. 2: eine Ansicht der erfindungsgemäßen Trommelbremse im zweiten Zustand,
- Fig. 3: eine Seitenansicht einer bevorzugten Ausführungsform der erfindungsgemäßen Bremsbacke,
- Fig. 4: eine erste Schnittansicht einer bevorzugten Ausführungsform der erfindungsgemäßen Bremsbacke,
- Fig. 5: eine zweite Schnittansicht einer bevorzugten Ausführungsform der erfindungsgemäßen Bremsbacke
- Fig. 6: eine Ansicht einer bevorzugten Ausführungsform des erfindungsgemäßen Betätigungsabschnitts, und
- Fig. 7: eine Ansicht einer bevorzugten Ausführungsform der erfindungsgemäßen Bremsbacke.

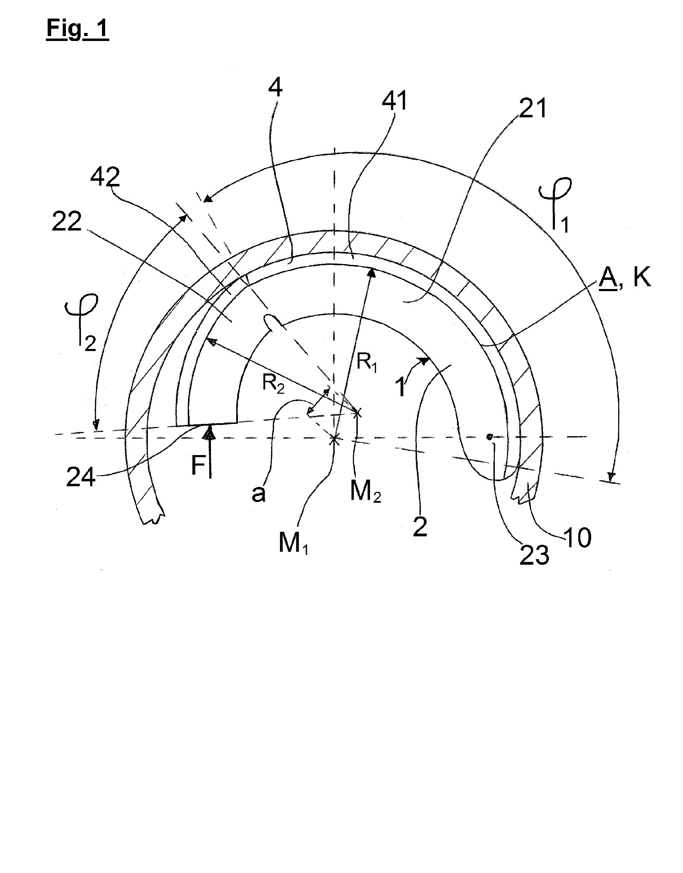

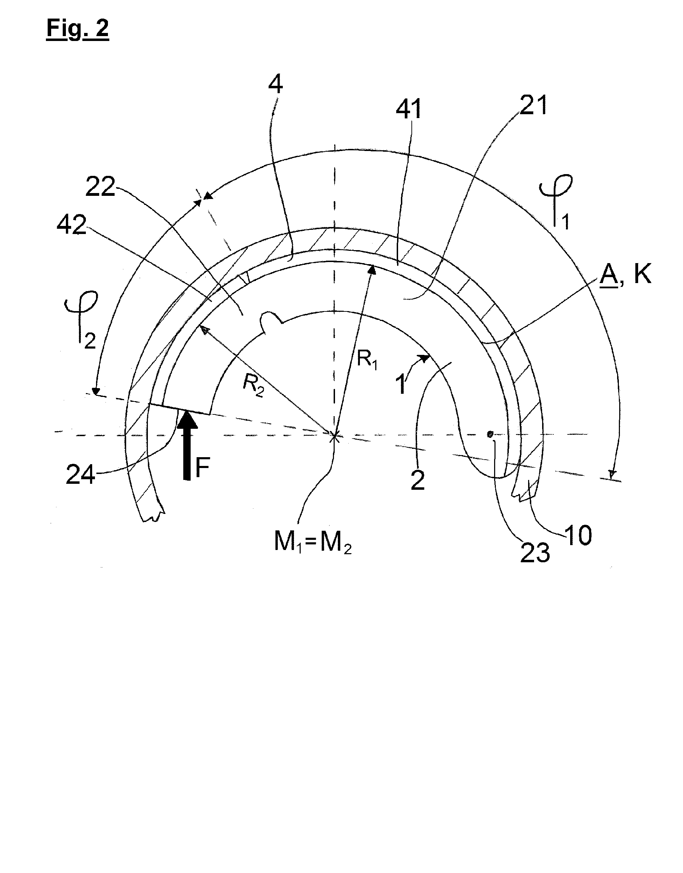

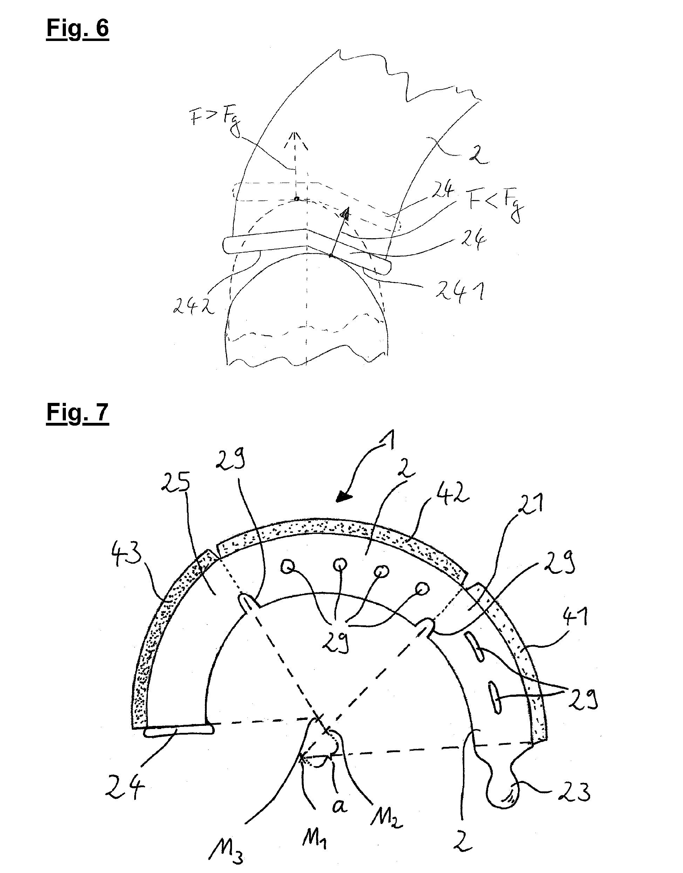

**Fig. 1** zeigt eine teilweise geschnittene Ansicht der erfindungsgemäßen Trommelbremse im ersten Zustand. Die Trommelbremse weist eine Bremstrommel 10 und eine Bremsbacke 1 auf, wobei die Bremsbacke 1 eine Trageinheit 2 und eine Belageinheit 4 umfasst. Die Trageinheit 2 ist ein gekrümmtes Bauteil, wobei an der konvexen Außenfläche A die Belageinheit 4 festgelegt ist. Weiterhin verläuft die Krümmungslinie K in der Außenfläche A zwischen dem Lagerabschnitt 23 und dem Betätigungsabschnitt 24 der Trageinheit 2. Die Trageinheit 2 weist einen ersten Tragabschnitt 21 auf, der bevorzugt benachbart zum Lagerabschnitt 23 angeordnet ist, und einen zweiten Tragabschnitt 22, welcher bevorzugt benachbart zum Betätigungsabschnitt 24 angeordnet ist. Alternativ bevorzugt kann eine Vielzahl von Tragabschnitten zwischen dem Lagerabschnitt 23 und dem Betätigungsabschnitt 24 vorgesehen sein. Erfindungsgemäß ist vorgesehen, dass der erste Tragabschnitt 21 eine Krümmung mit einem ersten mittleren Krümmungsradius R₁ aufweist, wobei der erste mittlere Krümmungsradius R₁ einen Kreissektor mit einem ersten Bogenwinkel ϕ₁ aufspannt. Analog hierzu weist der zweite Tragabschnitt 22 eine Krümmung mit einem zweiten mittleren Krümmungsradius R₂ auf, wobei der zweite mittlere Krümmungsradius R₂ einen Kreissektor mit einem zweiten Bogenwinkel ϕ₂ aufspannt. Bevorzugt ist das Verhältnis des ersten Bogenwinkels ϕ₁ zum zweiten Bogenwinkel ϕ₂ 0,5 bis 3, wobei der in der Figur ein besonders bevorzugter Bereich von 2 bis 2,6 dargestellt ist. Der Mittelpunkt M₁ der mittleren Krümmung des ersten Tragabschnitts 21 ist mit einem Abstand a vom Mittelpunkt M₂ der mittleren Krümmung des zweiten Tragabschnitts 22 beabstandet. Durch diese erfindungsgemäß verschiedene Krümmung des ersten und des zweiten Tragabschnitts 21, 22 wird erreicht, dass die Belageinheit 4 zunächst nur mit ihrem ersten Belagabschnitt 41 im Bereich des ersten Tragabschnitts 21 mit der Bremstrommel 10 in Reibung gelangt und erst nach Verbiegung der Trageinheit 2 auch mit dem zweiten Belagabschnitt 42 im Bereich des zweiten Tragabschnitts 22 (siehe hierzu auch Fig. 2). Bevorzugt wird dieses Verhalten der Bremsbacke 1 auch durch eine zwischen dem Lagerabschnitt 23 und dem Betätigungsabschnitt 24 variierende Biegesteifigkeit der Trageinheit 2 unterstützt und verstärkt. In der Figur dargestellt sind der erste mittlere Krümmungsradius R₁ der Krümmung des ersten Tragabschnitts 21 und der zweite mittlere Krümmungsradius R₂ der Krümmung des zweiten Tragabschnitts 22, wobei diese im unbelasteten Zustand der Bremsbacke 1 (nicht dargestellt) in einem bevorzugten Verhältnis von 0,8 bis 0,95 zueinander stehen. Die Bremstrommel 10 rotiert bevorzugt im Uhrzeigersinn relativ zur Bremsbacke 1, d.h. auf den Lagerbereich 23 zulaufend, um den Selbstverstärkungseffekt der Trommelbremse ausnutzen zu können. Der erste Zustand der Trommelbremse ist dadurch gekennzeichnet, dass am Betätigungsabschnitt 24 eine Betätigungskraft F anliegt, die kleiner ist als eine Grenzkraft F_{G} wodurch die Bremsbacke 1 und insbesondere die Belageinheit 4 nur in ihrem ersten Belagabschnitt 41 an der Bremstrommel 10 zur Anlage gelangt. Die Grenzkraft F_{G} ist in diesem Zusammenhang als abstrakte Größe zu verstehen, die sich durch die Konstruktive Auslegung der Trommelbremse ergibt. So kann sie auch definiert werden, als der Wert der Betätigungskraft F, bei welcher die Bremsbacke 1 gerade noch nur mit ihrem ersten Belagabschnitt 41 an der Bremstrommel 10 reibt. Ist eine Vielzahl von Belagabschnitten 41, 42, 43 vorgesehen (siehe auch Fig. 7), so wird es folglich eine erste Grenzkraft F_{G} geben, bis zu welcher nur der erste Belagabschnitt 41 reibt, eine zweite Grenzkraft F_{G}, bis zu welcher nur der erste und der zweite Belagabschnitt 41, 42 reiben, und so fort. Der Übergang zwischen den Belagabschnitten 41, 42 kann stufenlos sein, wenn Sprünge im Verlauf der Bremskraft bei kontinuierlich ansteigender Betätigungskraft F vermieden werden sollen. Wie in der Figur dargestellt können die einzelnen Belagabschnitte 41, 42 bevorzugt auch deutlich gegeneinander abgegrenzt sein, bspw. durch Rillen, Aussparungen oder Spalte zwischen den Belagabschnitten 41, 42.

**Fig. 2** zeigt die in Fig. 1 dargestellte Trommelbremse im zweiten Zustand. Dabei ist die am Betätigungsabschnitt 24 angreifende Betätigungskraft F größer als die Grenzkraft F_{G} und die Trageinheit 2 der Bremsbacke 1 wird derart verformt, dass der zweite Belagabschnitt 42 gegen die Innenseite der Bremstrommel 10 gepresst wird. Die Verformung der Trageinheit 2 bewirkt dabei bevorzugt auch, dass der zweite mittlere Krümmungsradius R₂ der Krümmung des zweiten Tragabschnitts 22 gleich dem ersten mittleren Krümmungsradius R₁ des ersten Tragabschnitts 21 ist. Weiterhin bevorzugt sind im zweiten Zustand der Trommelbremse die Mittelpunkte M₁, M₂ der mittleren Krümmung des ersten und des zweiten Tragabschnitts 21, 22 deckungsgleich. Mit anderen Worten gleicht sich die Außenkontur der Bremsbacke 1 im zweiten Zustand mit zunehmender Betätigungskraft immer mehr an die Innenkontur der Bremstrommel 10 an, wobei der Betrag der Reibfläche zwischen der Belageinheit 4 und der Bremstrommel 10 zunimmt.

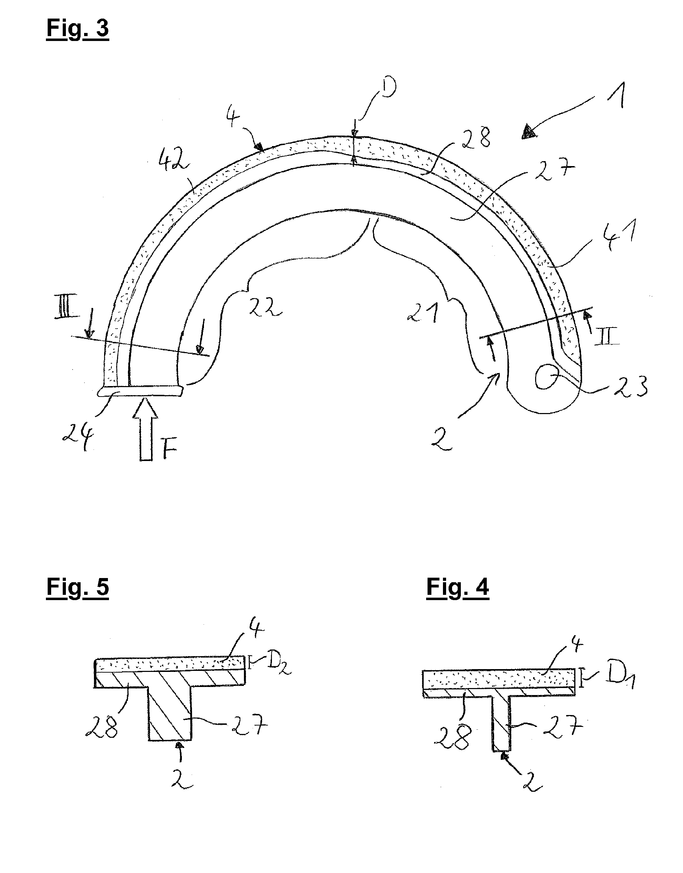

Die in **Fig. 3** gezeigte Ausführungsform der erfindungsgemäßen Bremsbacke 1 weist eine Trageinheit 2 und eine Belageinheit 4 auf. Die Trageinheit 2 ist dabei bevorzugt bogenförmig, bzw. gekrümmt ausgebildet, wobei an der konvexen Außenseite der Krümmung die Belageinheit 4 angeordnet ist. Die Trageinheit 2 weist einen Lagerabschnitt 23 und einen Betätigungsabschnitt 24 auf, wobei der Lagerabschnitt in der bevorzugten gezeigten Ausführungsform, beispielsweise eine Bohrung ist, über welche die Trageinheit 2, beispielsweise mittels eines Bolzens, schwenkbar lagerbar ist. Weiterhin weist die Trageinheit 2 einen ersten Tragabschnitt 21 und einen zweiten Tragabschnitt 22 auf, wobei der erste Tragabschnitt 21 bevorzugt eine geringere Biegesteifigkeit aufweist, als der zweite Tragabschnitt 22. Die Belageinheit 4 weist bevorzugt im Bereich des ersten Tragabschnitts 21, einen ersten Belagabschnitt 41 und im Bereich des zweiten Tragabschnitts 22 einen zweiten Belagabschnitt 42 auf. Insbesondere bevorzugt ist dabei, wie dargestellt, die Dicke D der Belageinheit im Bereich des ersten Belagabschnitts im Durchschnitt größer als im Bereich des zweiten Belagabschnitts 42.

**Fig. 4** zeigt die in Fig. 3 mit der Ziffer II angedeutete Schnittansicht einer bevorzugten Ausführungsform der erfindungsgemäßen Bremsbacke 1. Deutlich dargestellt ist dabei die T-förmige Ausbildung der Trageinheit 2, welche ein Belagbleich 28 und ein Tragblech 27 aufweist. Die Bremsbacke 1 ist in Fig. 4 im Bereich des ersten Belagabschnitts 41, bzw. des ersten Tragabschnitts 21 geschnitten und die Belageinheit 4 weist in diesem Bereich eine mittlere Dicke D₁ auf. Bevorzugt kann die Trageinheit 2 auch einen Doppel-T-förmigen Querschnitt aufweisen, also zwei, parallel zueinander stehende Tragbleche 27, oder beispielsweise kastenförmig ausgebildet sein, wobei das Tragblech 27 U-förmig ausgebildet, und mit seinen distalen Enden mit dem Belagblech 28 verbunden ist.

**Fig. 5** zeigt die in Fig. 3 mit der Ziffer III. angedeutete Schnittansicht der Bremsbacke 1. Dabei ist die Belageinheit 4 im zweiten Belagabschnitt 42 beziehungsweise im Bereich des zweiten Tragabschnitts 22 geschnitten und weist eine Dicke D₂ auf, die kleiner ist, als die Dicke D₁ des ersten Belagabschnitts 41 (siehe Fig. 2). Weiterhin wird deutlich, dass das Belagblech 28 der Trageinheit 2 im Bereich des zweiten Tragabschnitts 22 eine größere Dicke, bzw. Materialstärke aufweist, als das Belagblech 28 im Bereich des ersten Tragabschnitts (21). Konsequenterweise weist das Belagblech 28 im Bereich des zweiten Tragabschnitts 22 eine höhere Biegesteifigkeit auf, als das Belagblech 28 im Bereich des ersten Tragabschnitts 21. Ebenso verhält es sich mit dem Stegblech 27, welches im Bereich des zweiten Tragabschnitts 22, wie dargestellt in Fig. 5, eine größere Materialstärke bzw. Wandstärke oder Blechdicke aufweist, als im Bereich des ersten Tragabschnitts 21, wie dargestellt in Fig. 4.

**Fig. 6** zeigt eine bevorzugte Ausführungsform des Betätigungsabschnitts 24. Der Betätigungsabschnitt 24 weist bevorzugt einen ersten Eingriffsabschnitt 241 und einen zweiten Eingriffsabschnitt 242 auf, welche jeweils flächig beziehungsweise eben ausgebildet sind und relativ zueinander verschwenkt sind. Unterhalb des Betätigungsabschnitts 24 ist ein Betätigungselement angedeutet (ohne Bezugszeichen), welches eine Betätigungskraft F auf den Betätigungsabschnitt 24 überträgt. Dabei ist in der Figur mit durchgehenden Linien dargestellt, wie im ersten Zustand der Trommelbremse, das Betätigungselement eine Betätigungskraft F, auf den ersten Eingriffsabschnitt 241 überträgt, welche kleiner als eine Grenzkraft F_{G} ist. Es zeigt sich, dass durch die schräge Anordnung des ersten Eingriffsabschnitts 241 die resultierende auf die Trageinheit 2 wirkende Kraft eine nach rechts gewandte Kraftkomponente aufweist. Gestrichelt dargestellt ist in Fig. 6 die bevorzugte Position der Trageinheit 2 im zweiten Zustand der Trommelbremse erkennbar, wobei das Betätigungselement nun am zweiten Eingriffsabschnitt 242 angreift. Bevorzugt ist dabei die Betätigungskraft F größer als die Grenzkraft F_{G}, wobei die tatsächlich auf die Trageinheit 2 übertragene Kraft eine andere Hauptrichtung aufweist, als die im ersten Zustand der Trommelbremse auf die Trageinheit 2 übertragene Betätigungskraft. Durch diese bevorzugte Ausführungsform wird im ersten Zustand eine Kraft, welche zumindest bereichsweise entlang der Umfangsrichtung der Trageinheit 2, bzw. der diese bevorzugt umgebenden Bremstrommel 10 (siehe Fig. 1, 2) wirkt, auf die Trageinheit 2 übertragen. Dabei wird bevorzugt der erste Belagabschnitt (in Fig. 6 nicht gezeigt) im ersten Zustand der Trommelbremse von einer zusätzlichen Kraft gegen die Bremstrommel gepresst wird. Es versteht sich, dass der erste Eingriffsabschnitt 241 und der zweite Eingriffsabschnitt 242 auch gerundet ausgebildet sein können, wobei der Übergang zwischen den beiden Eingriffsabschnitten ebenfalls gerundet ausgebildet sein kann. Vorzugsweise ist der Betätigungsabschnitt 24 an die Geometrie des Betätigungselements angepasst, um eine optimale Kraftübertragung vom Betätigungselement and die Trageinheit 2 zu ermöglichen.

**Fig. 7** zeigt eine insbesondere bevorzugte Ausführungsform der erfindungsgemäßen Bremsbacke 1. Die Bremsbacke 1 weist dabei bevorzugt eine Trageinheit 2 mit drei Tragabschnitten 21, 22, 25 auf. Der an den Lagerabschnitt 23 grenzende Tragabschnitt 21 besitzt eine mittlere Krümmung deren Mittelpunkt M₁ bevorzugt versetzt zu den Mittelpunkten M₂ und M₃ der mittleren Krümmung des zweiten Tragabschnitts 22 und des dritten Tragabschnitts 25 ist. Dabei ist beispielhaft der Abstand a des Mittelpunkts M₁ vom Mittelpunkt M₂ gekennzeichnet, welcher bevorzugt in einem Verhältnis von 0,01 bis 0,2, bevorzugt 0,05 bis 0,1 und besonders bevorzugt von 0,07 bis 0,09 zum ersten mittleren Krümmungsradius R₁ des ersten Tragabschnitts 21 steht. Weiterhin weisen zwei der Tragabschnitte 21, 22, 25 vorzugsweise lokale Materialschwächungen 29 auf, welche die Biegesteifigkeit der Trageinheit 2 entlang dem Krümmungsverlauf zwischen Lagerabschnitt 23 und Betätigungsabschnitt 24. Bevorzugt sind auch im Übergangsbereich zwischen zwei Tragabschnitten 21, 22, 25 Materialschwächungen 29, beispielsweise als Rücksprung ausgebildet, vorgesehen, wodurch die Tragbereiche 21, 22, 25 leichter zueinander verschwenkbar sind und ein optimales Anliegen der Bremsbacke 1 an einer Bremstrommel 10 (nicht gezeigt) während verschiedener Betriebszustände der Bremse erreichbar ist. In Fig. 7 dargestellt ist auch die bevorzugte Ausbildung der Belagabschnitte 41, 42, 43 aus verschiedenen Materialien. Mit Vorteil weist dabei der erste Belagabschnitt 41 eine höhere Abriebfestigkeit auf als der zweite Belagabschnitt 42 und der dritte Belagabschnitt 43, wobei der dritte Belagabschnitt 43 im Gegenzug den höchsten Reibwert der der Belagabschnitte 41, 42, 43 aufweist. Somit kann das Brems- und Abnutzungsverhalten der Bremsbacke 1 für bestimmte, erwartete Belastungszeiten der einzelnen Belagabschnitte 41, 42, 43 im Betrieb und für die geforderten Bremskräfte optimiert werden. In der gezeigten Ausführungsform weisen alle Belagabschnitte 41, 42, 43 die gleiche Dicke auf. Es könnte alternativ bevorzugt sein, die Dicke D₁ des ersten Belagabschnitts 41 größer als die Dicke D₂ des zweiten Belagabschnitts 42 und diese wiederum größer als die Dicke D₃ des dritten Belagabschnitts 43 auszubilden.

### Bezugszeichenliste:

- 2: - Trageinheit
- 4: - Belageinheit
- 10: - Bremstrommel
- 21: - erster Tragabschnitt
- 22: - zweiter Tragabschnitt
- 23: - Lagerabschnitt
- 24: - Betätigungsabschnitt
- 25: - dritter Tragabschnitt
- 27: - Stegblech
- 28: - Belagblech
- 29: - Materialschwächung
- 41: - erster Belagabschnitt
- 42: - zweiter Belagabschnitt
- 43: - dritter Belagabschnitt
- 241: - erster Eingriffsabschnitt
- 242: - zweiter Eingriffsabschnitt
- D: - Dicke der Belageinheit
- A: - Außenfläche der Trageinheit
- a: - Abstand
- D₁: - erste Dicke
- D₂: - zweite Dicke
- F: - Betätigungskraft
- F_{G}: - Grenzkraft
- K: - Krümmungslinie
- M₁, M₂, M₃: - Mittelpunkt der mittleren Krümmung
- R₁: - erster Krümmungsradius
- R₂: - zweiter Krümmungsradius
- ϕ₁, ϕ₂: - erster, zweiter Bogenwinkel

## Patentansprüche

1. Bremsbacke (1) für eine Trommelbremse, aufweisend eine Trageinheit (2), welche einen Lagerabschnitt (23) zur schwenkbaren Lagerung und einen Betätigungsabschnitt (24) aufweist,
wobei die Trageinheit (2) zwischen dem Lagerabschnitt (23) und dem Betätigungsabschnitt (24) einen gekrümmt ausgebildeten ersten Tragabschnitt (21) und einen gekrümmt ausgebildeten zweiten Tragabschnitt (22) aufweist, und
wobei der Mittelpunkt (M₁) der mittleren Krümmung des ersten Tragabschnitts (21) vom Mittelpunkt (M₂) der mittleren Krümmung des zweiten Tragabschnitts (22) beabstandet ist, **dadurch gekennzeichnet dass** der erste Tragabschnitt (21) einen ersten Bogenwinkel (ϕ₁) um den Mittelpunkt (M₁) seiner mittleren Krümmung aufspannt,
wobei der zweite Tragabschnitt (22) einen zweiten Bogenwinkel (ϕ₂) um den Mittelpunkt (M₂) seiner mittleren Krümmung aufspannt, und
wobei das Verhältnis des ersten Bogenwinkels (ϕ₁) zum zweiten Bogenwinkel (ϕ₂) im Bereich von 0,5 bis 3 liegt.

2. Bremsbacke (1) nach Anspruch 1,
wobei die mittlere Krümmung des ersten Tragabschnitts (21) einen ersten Krümmungsradius (R₁) aufweist und,
wobei die mittlere Krümmung des zweiten Tragabschnitts (22) einen zweiten Krümmungsradius (R₂) aufweist, wobei der zweite Krümmungsradius (R₂) kleiner ist als der erste Krümmungsradius (R₁).

3. Bremsbacke (1) nach Anspruch 2,
wobei der Abstand (a) der Mittelpunkte (M₁, M₂) voneinander in einem Verhältnis von 0,01 bis 0,15, bevorzugt 0,03 bis 0,1 und besonders bevorzugt von 0,05 bis 0,07 zum ersten Krümmungsradius (R₁) steht.

4. Bremsbacke (1) nach einem der vorhergehenden Ansprüche,
wobei das Verhältnis des ersten Bogenwinkels (ϕ₁) zum zweiten Bogenwinkel (ϕ₂) im Bereich von 0,7 bis 2 und besonders bevorzugt bei ca. 0,9 bis 1,3 liegt.

5. Bremsbacke (1) nach einem der Ansprüche 2 bis 4,
wobei im entspannten Zustand der Bremsbacke (1) der zweite Krümmungsradius (R₂) des zweiten Tragabschnitts (22) zum ersten Krümmungsradius (R₁) des ersten Tragabschnitts (21) in einem Verhältnis von 0,8 bis 0,99, vorzugsweise 0,85 bis 0,95 und besonders bevorzugt von ca. 0,88 bis 0,92 steht.

6. Bremsbacke (1) nach einem der vorhergehenden Ansprüche,
wobei an der konvex gekrümmten Außenseite der Trageinheit (2) eine Belageinheit (4) festlegbar ist,
wobei die Trageinheit (2) und die Belageinheit (4) derart ausgebildet sind, dass bei Anlegen einer Betätigungskraft (F) kleiner einer Grenzkraft (F_{G}) an den Betätigungsabschnitt (24) die Belageinheit (4) nur in einem ersten Belagabschnitt (41) Bremswirkung entfaltet,
wobei bei Anlegen einer Betätigungskraft (F) größer der Grenzkraft (F_{G}) die Belageinheit (4) auch in einem zweiten Belagabschnitt (42) Bremswirkung entfaltet.

7. Bremsbacke (1) nach Anspruch 6,
wobei der erste Belagabschnitt (41) eine größere Dicke (D) aufweist als der zweite Belagabschnitt (42).

8. Bremsbacke (1) nach Anspruch 6 oder 7,
wobei der erste Belagabschnitt (41) eine erste Dicke (D₁) und der zweite Belagabschnitt (42) eine zweite Dicke (D₂) aufweist,
wobei die erste Dicke (D₁) bevorzugt in einem Verhältnis von 1,05 bis 4, besonders bevorzugt von 1,2 bis 2 und insbesondere bevorzugt von ca. 1,5 zur zweiten Dicke (D₂) steht.

9. Bremsbacke (1) nach einem der Ansprüche 6 bis 8,
wobei der erste Belagabschnitt (41) aus einem Material höherer Abriebbeständigkeit ausgebildet ist als der zweite Belagabschnitt (42).

10. Bremsbacke (1) nach einem der Ansprüche 6 bis 9,
wobei der Reibwert des zweiten Belagabschnitts (42) ein 1,1- bis 3-faches, bevorzugt 1,15- bis 2-faches und besonders bevorzugt 1,3- bis 1,7-faches des Reibwertes des ersten Belagabschnitts (41) beträgt.

11. Bremsbacke (1) nach einem der vorhergehenden Ansprüche,
wobei die Trageinheit (2) zumindest eine lokale Materialschwächung (29) aufweist, die die Biegesteifigkeit der Trageinheit (2) verringert.

12. Bremsbacke (1) nach einem der vorhergehenden Ansprüche,
wobei der Betätigungsabschnitt (24) einen ersten Eingriffsabschnitt (241) und einen zweiten Eingriffsabschnitt (242) aufweist,
wobei der erste Eingriffsabschnitt (241) ausgelegt ist, eine Betätigungskraft (F) kleiner einer Grenzkraft (F_{G}) auf die Trägereinheit (2) zu übertragen, wobei der zweite Eingriffsabschnitt (242) ausgelegt ist eine Betätigungskraft (F) größer der Grenzkraft (F_{G}) auf die Trageinheit (2) zu übertragen.

13. Trommelbremse umfassend eine Bremstrommel (10) und eine Bremsbacke (1) mit einer Belageinheit (4) und einer Trageinheit (2),
wobei die Trageinheit (2) einen gekrümmt ausgebildeten ersten Tragabschnitt (21) und einen gekrümmt ausgebildeten zweiten Tragabschnitt (22) aufweist, **dadurch gekennzeichnet dass** der erste Tragabschnitt (21) einen ersten Bogenwinkel (ϕ₁) und der zweite Tragabschnitt (22) einen zweiten Bogenwinkel (ϕ₂) aufspannt, und wobei das Verhältnis des ersten Bogenwinkels (ϕ₁) zum zweiten Bogenwinkel (ϕ₂) im Bereich von 0,5 bis 3 liegt, derart dass in einem ersten Zustand der Trommelbremse die Belageinheit (4) nur mit einem ersten Belagabschnitt (41) mit der Bremstrommel (10) in Eingriff gelangt, und
in einem zweiten Zustand der Trommelbremse die Belageinheit (4) mit dem ersten Belagabschnitt (41) und einem zweiten Belagabschnitt (42) mit der Bremstrommel (10) in Eingriff gelangt.

14. Trommelbremse nach Anspruch 13,
wobei die Bremsbacke (1) derart ausgebildet ist, dass bei Anlegen einer Betätigungskraft (F), um die Bremsbacke (1) gegen die Bremstrommel (10) zu pressen, der erste Zustand **dadurch gekennzeichnet ist, dass** die Betätigungskraft (F) eine Grenzkraft (F_{G}) nicht übersteigt, und
wobei der zweite Zustand **dadurch gekennzeichnet ist, dass** die Betätigungskraft (F) größer als die Grenzkraft (F_{G}) ist.

15. Trommelbremse nach einem der Ansprüche 13 oder 14,
wobei die Bremsbacke (1) nach einem der Ansprüche 1 bis 12 ausgebildet ist.

## Claims

1. A brake shoe (1) for a drum brake,
comprising a supporting unit (2), which comprises a bearing portion (23) for pivotable support and an actuation portion (24),
wherein the supporting unit (2) between the bearing portion (23) and the actuation portion (24) comprises a first supporting portion (21), which is designed such that it is curved, and a second supporting portion (22), which is designed such that it is curved, and
wherein the center (M₁) of the mean curvature of the first supporting portion (21) is spaced apart from the center (M₂) of the mean curvature of the second supporting portion (22)
**characterized in that**
the first supporting portion (21) spans a first angle of the arc or radian (ϕ₁) about the center (M₁) of the mean curvature thereof,
wherein the second supporting portion (22) spans a second angle of the arc (ϕ₂) about the center (M₂) of the mean curvature thereof, and wherein the relationship of the first angle of the arc (ϕ₁) to the second angle of the arc (ϕ₂) is in a range of 0.5 to 3.

2. The brake shoe (1) of claim 1,
wherein the mean curvature of the first supporting portion (21) has a first radius of curvature (R₁), and wherein the mean curvature of the second supporting portion (22) has a second radius of curvature (R₂), wherein the second radius of curvature (R₂) is smaller than the first radius of curvature (R₁).

3. The brake shoe (1) of claim 2,
wherein the distance (a) of the centers (M₁, M₂) relative to each other is in a relationship of 0.01 to 0.15, preferably 0.03 to 0.1, and particularly preferably 0.05 to 0.07 to a first radius of curvature (R₁).

4. The brake shoe (1) of any one of the preceding claims,
wherein the first supporting portion (21) spans a first angle of the arc or radian (ϕ₁) about the center (M₁) of the mean curvature thereof,
wherein the second supporting portion (22) spans a second angle of the arc (ϕ₂) about the center (M₂) of the mean curvature thereof, and
wherein the relationship of the first angle of the arc (ϕ₁) to the second angle of the arc (ϕ₂) is in a range of 0.5 to 3, preferably 0.7 to 2, and particularly preferably about 0.9 to 1.3.

5. The brake shoe (1) of any one of claims 2 - 4,
wherein in the decompressed or relaxed state of the brake shoe (1) the second radius of curvature (R₂) of the second supporting portion (22) to the first radius of curvature (R₁) of the first supporting portion (21) is in a relationship of 0.8 to 0.99, preferably 0.85 to 0.95, and particularly preferably about 0.88 to 0.92.

6. The brake shoe (1) of any one of the preceding claims,
wherein a lining unit (4) may be fixed at the convexly curved outer side of the supporting unit (2),
wherein the supporting unit (2) and the lining unit (4) are formed such that, when an actuation force (F) smaller than a limiting force (F_{G}) is applied to the actuation portion (24), the lining unit (4) shows a braking effect in a first lining portion (41) only,
wherein, when an actuation force (F) larger than the limiting force (F_{G}) is applied, the lining unit (4) shows a braking effect also in a second lining portion (42).

7. The brake shoe (1) of claim 6,
wherein the first lining portion (41) has a greater thickness than the second lining portion (42).

8. The brake shoe (1) of claim 6 or 7,
wherein the first lining portion (41) has a first thickness (D₁) and the second lining portion (42) has a second thickness (D₂),
wherein the first thickness (D₁) is preferably in a relationship of 1.05 to 4, more preferably 1.2 to 2, and particularly preferably about 1.5 to the second thickness (D₂).

9. The brake shoe (1) of any one of claims 6 to 8,
wherein the first lining portion (41) is made from a material having a greater abrasion resistance than the second lining portion (42).

10. The brake shoe (1) of any one of claims 6 to 9,
wherein the coefficient of friction of the second lining portion (42) is 1.1 to 3 times, preferably 1.15 to 2 times, and particularly preferably 1.3 to 1.7 times the coefficient of friction of the first lining portion (41).

11. The brake shoe (1) of any one of the preceding claims,
wherein the supporting unit (2) comprises at least one material weakness (29), which reduces the bending stiffness of the supporting unit (2).

12. The brake shoe (1) of any one of the preceding claims,
wherein the actuation portion (24) comprises a first engagement portion (241) and a second engagement portion (242), wherein the first engagement portion (241) is designed to transmit an actuation force (F) smaller than the limiting force (F_{G}) to the supporting unit (2), and wherein the second engagement portion (242) is designed to transmit an actuation force (F) larger than the limiting force (F_{G}) to the supporting unit (2).

13. A drum brake comprising a brake drum (10) and a brake shoe (1) having a lining unit (4),
wherein, in a first state of the drum brake, the lining unit (4) comes into engagement with the brake drum (10) with a first lining portion (41) only, and
wherein, in a second state of the drum brake, the lining unit (4) comes into engagement with the brake drum (10) with the first lining portion (41) and a second lining portion (42).

14. The drum brake of claim 13,
wherein the brake shoe (1) is formed such that upon an actuation force (F) acts to push or force the brake shoe (1) against the brake drum (10), the first state is **characterized in that** the actuation force (F) does not exceed a limiting force (F_{G}), and
wherein the second state is **characterized in that** the actuation force (F) is larger than the limiting force (F_{G}).

15. The brake drum of any one of claims 13 or 14,
wherein the brake drum (1) is designed according to any one of claims 1 to 12.

## Revendications

1. Mâchoire de frein (1) pour un frein à tambour,
comprenant une unité de support (2), qui comprend une portion de montage (23) pour un montage en pivotement, et une portion d'actionnement (24),
dans laquelle l'unité de support (2) comprend, entre la portion de montage (23) et la portion d'actionnement (24), une première portion de support (21) réalisée incurvée et une seconde portion de support (22) réalisée incurvée, et dans laquelle le centre (M1) de la courbure moyenne de la première portion de support (21) est à distance du centre (M2) de la courbure moyenne de la seconde portion de support (22),
**caractérisée en ce que**
la première portion de support (21) couvre un premier arc angulaire (ϕ1) autour du centre (M1) de sa courbure moyenne,
**en ce que** la seconde portion de support (22) couvre un second arc angulaire (ϕ₂) autour du centre (M2) de sa courbure moyenne, et
**en ce que** le rapport du premier arc angulaire (ϕ1) sur le second arc angulaire (ϕ₂) est dans la plage de 0,5 à 3.

2. Mâchoire de frein (1) selon la revendication 1,
dans laquelle la courbure moyenne de la première portion de support (21) présente un premier rayon de courbure (R1), et
dans laquelle la courbure moyenne de la seconde portion de support (22) présente un second rayon de courbure (R2),
dans laquelle le second rayon de courbure (R2) est plus petit que le premier rayon de courbure (R1).

3. Mâchoire de frein (1) selon la revendication 2,
dans laquelle la distance (a) des centres (M1, M2) l'un par rapport à l'autre est dans un rapport de 0,01 à 0,15, de préférence 0,03 à 0,1, et de manière particulièrement préférée de 0,05 à 0,07 par rapport au premier rayon de courbure (R1).

4. Mâchoire de frein (1) selon l'une des revendications précédentes,
dans laquelle le rapport du premier arc angulaire (ϕ1) sur le second arc angulaire (ϕ₂) est dans une plage de 0,7 à 2, et de manière particulièrement préférée d'environ 0,9 à 1,3.

5. Mâchoire le frein (1) selon l'une des revendications 2 à 4,
dans laquelle, dans l'état détendu de la mâchoire de frein (1), le premier rayon de courbure (R2) de la première portion de support (22) présente vis-à-vis du rayon de courbure (R1) de la première portion de support (21) un rapport de 0,8 à 0,99, de préférence 0,85 à 0,95, et de manière particulièrement préférée d'environ 0,88 à 0,92.

6. Mâchoire de frein (1) selon l'une des revendications précédentes,
dans laquelle une unité à garniture (4) est susceptible d'être immobilisée sur le côté extérieur, de courbure convexe, de l'unité de support (2), dans laquelle l'unité de support (2) et l'unité à garniture (4) sont réalisées de telle façon que lors de l'application d'une force d'actionnement (F) plus petite qu'une force limite (FG) sur la portion d'actionnement (24), l'unité à garniture (4) déploie son effet de freinage uniquement dans une première portion (41) de la garniture,
dans laquelle, lors de l'application d'une force d'actionnement (F) plus grande que la force limite (FG), l'unité à garniture (4) déploie son effet de freinage également dans une seconde portion (42) de la garniture.

7. Mâchoire de frein (1) selon la revendication 6,
dans laquelle la première portion de garniture (41) présente une épaisseur (D) plus importante que la seconde portion de garniture (42).

8. Mâchoire de frein (1) selon la revendication 6 ou 7,
dans laquelle la première portion de garniture (41) présente une première épaisseur (D1) et la seconde portion de garniture (42) présente une seconde épaisseur (D2),
dans laquelle la première épaisseur (D1) présente par rapport à la seconde épaisseur (D2) un rapport de 1,05 à 4, de manière préférée de 1,2 à 2, et de manière particulièrement préférée d'environ 1,5.

9. Mâchoire de frein (1) selon l'une des revendications 6 à 8,
dans laquelle la première portion de garniture (41) est réalisée en un matériau présentant une plus forte résistance à l'abrasion que la seconde portion de garniture (42).

10. Mâchoire de frein (1) selon l'une des revendications 6 à 9,
dans laquelle le coefficient de friction de la seconde portion de garniture (42) s'élève à 1,1 à 3 fois, de préférence 1,15 à 2 fois, et de manière particulièrement préférée 1,3 à 1,7 fois le coefficient de friction de la première portion de garniture (41).

11. Mâchoire de frein (1) selon l'une des revendications précédentes,
dans laquelle l'unité de support (2) comporte au moins un affaiblissement local du matériau (29), qui réduit la résistance à la flexion de l'unité de support (2).

12. Mâchoire de frein (1) selon l'une des revendications précédentes,
dans laquelle la portion d'actionnement (24) comprend une première portion d'attaque (241) et une seconde portion d'attaque (241),
dans lesquelles la première portion d'attaque (241) est conçue pour transmettre une force d'actionnement (F) plus petite qu'une force limite (FG) à l'unité de support (2),
et dans lesquelles la seconde portion d'attaque (242) est conçue pour transmettre une force d'actionnement (F) plus grande que la force limite (FG) à l'unité de support (2).

13. Frein à tambour incluant un tambour de frein (10) et une mâchoire de frein (1) avec une unité à garniture (4) et une unité de support (2),
dans lequel l'unité de support (2) comprend une première portion de support (21) réalisée incurvée et une seconde portion de support (22) réalisée incurvée,
**caractérisé en ce que**
la première portion de support (21) couvre un premier arc angulaire (ϕ1) et la seconde portion de support (22) couvre un second arc angulaire (ϕ2), et
dans lequel le rapport du premier arc angulaire (ϕ1) sur le second arc angulaire (ϕ₂) est dans la plage de 0,5 à 3, de telle façon que dans un premier état du frein à tambour l'unité à garniture (4) vient en engagement avec le tambour de frein (10) uniquement dans une première portion (41) de la garniture, et
dans un second état du frein tambour, l'unité à garniture (4) vient en engagement avec le tambour de frein (10) avec la première portion (41) de la garniture et avec une seconde portion (42) de la garniture.

14. Frein à tambour selon la revendication 13,
dans lequel la mâchoire de frein (1) est réalisée de telle façon que lors de l'application d'une force d'actionnement (F), afin de presser la mâchoire de frein (1) contre le tambour de frein (10), le premier état est **caractérisé par le fait que** la force d'actionnement (F) ne dépasse pas une force limite (FG), et
dans lequel le second état est **caractérisé par le fait que** la force d'actionnement (F) est plus grande que la force limite (FG).

15. Frein à tambour selon l'une des revendications 13 ou 14,
dans lequel la mâchoire de frein (1) est réalisée selon l'une des revendications 1 à 12.
